# EUROPÄISCHE PATENTSCHRIFT

(11) **EP 2 877 760 B1**
(45) Veröffentlichungstag und Bekanntmachung des Hinweises auf die Patenterteilung: **07.09.2016**
(21) Anmeldenummer: 13727867.7
(22) Anmeldetag: 05.06.2013
(51) Int. Cl.: F16H 61/421, F16H 61/431

(54) **VORRICHTUNG ZUM VARIIEREN DER VOLUMINA EINER ERSTEN HYDRAULIKMASCHINE UND EINER ZWEITEN HYDRAULIKMASCHINE**
DEVICE FOR VARYING THE VOLUMES OF A FIRST HYDRAULIC MACHINE AND A SECOND HYDRAULIC MACHINE
DISPOSITIF DE VARIATION DES VOLUMES D'UNE PREMIÈRE MACHINE HYDRAULIQUE ET D'UNE DEUXIÈME MACHINE HYDRAULIQUE

(30) Priorität: 26.07.2012 DE 102012213173
(43) Veröffentlichungstag der Anmeldung: 03.06.2015
(73) Patentinhaber: ZF Friedrichshafen AG, 88046 Friedrichshafen (DE)
(72) Erfinder: KUHN, Jan-Frederik, 88046 Friedrichshafen (DE); MAISE, Timo, 74223 Flein (DE); HIEMER, Marcus, 88074 Meckenbeuren (DE); SCHINACHER, Stephan, 78592 Egesheim (DE); BIEBER, Sven, 88697 Bermatingen (DE)
(86) Internationale Anmeldenummer: PCT/EP2013/061542
(87) Internationale Veröffentlichungsnummer: WO 2014/016029

(56) Entgegenhaltungen:
- WO-A1-2009/047039
- DE-A1- 3 713 799
- DE-A1-102009 045 510
- US-A- 4 510 750

## Beschreibung

Die Erfindung betrifft eine Vorrichtung zum Variieren der Volumina einer ersten Hydraulikmaschine und einer zweiten Hydraulikmaschine gemäß der im Oberbegriff des Patentanspruches 1 näher definierten Art.

Eine Vorrichtung dieser Art ist aus der WO 2009/047039 A1 bekannt.

Aus der DE 10 2009 045 510 A1 ist eine Vorrichtung zum Variieren der Hubvolumina einer ersten Hydraulikmaschine und einer zweiten Hydraulikmaschine bekannt. Ein Kolben einer Kolben-Zylinder-Einrichtung ist mit Achsen der Hydraulikmaschinen wirkverbunden. Der Kolben ist in Abhängigkeit einer fahrerseitigen Leistungsanforderung über eine Positionsregelventileinheit und eine Hochdruckregelventileinheit einer Ventileinrichtung bzw. einer Regelventileinheit im Bereich von einer einen Kolbenraum begrenzenden Wirkfläche mit zu einem im Bereich der Hydraulikmaschinen vorliegenden hydraulischen Druck korrespondierenden und in eine erste Stellrichtung der Achsen der Hydraulikmaschinen wirkenden Drücken beaufschlagbar. Der Druck im Bereich der Hydraulikmaschinen ist über die Positionsregelventileinheit geregelt einstellbar und über die Hochdruckregelventileinheit geregelt begrenzbar. Des Weiteren ist der Kolben über die Ventileinrichtung im Bereich einer einen weiteren Kolbenraum begrenzenden weiteren Wirkfläche mit im Bereich der Hydraulikmaschinen vorliegendem hydraulischem Druck korrespondierenden und in eine zweite Stellrichtung der Achsen der Hydraulikmaschinen wirkenden Drücken beaufschlagbar, wobei die Wirkungsweise der Positionsregelventileinheit im Bereich der Hochdruckregelventileinheit umkehrbar ist.

Charakteristisch für ein mit den Hydraulikmaschinen und der zugeordneten vorbeschriebenen Vorrichtung ausgeführtes Getriebe sind die Möglichkeit der stufenlosen Einstellung der Getriebegesamtübersetzung und die Lastfühligkeit. Beide Charakteristika werden mithilfe der als Axialkolbenmaschinen ausgeführten Hydraulikmaschinen erzielt. Die Übersetzung des Getriebes wird durch Verschwenkung von Achsen der Hydraulikmaschinen stufenlos geändert, wobei dies über die Betriebsart Positionsregelung im Bereich der Vorrichtung erfolgt. Die Lastfühligkeit wird im Betriebsmodus der Hochdruckregelung umgesetzt. Ein maximaler Hochdruck im Bereich der Hydraulikmaschinen ist über einen im Bereich der Vorrichtung anlegbaren Steuerdruck begrenzbar. Wird der von dem Hydrostaten bzw. den Hydraulikmaschinen abgeforderte Hochdruck, beispielsweise durch ein externes Drehmoment, wie während einem Einfahren eines Radladers in ein Haufwerk, größer als der durch die Steuerung maximal zulässige Druckwert, werden die Hubvolumina der Hydraulikmaschinen durch Verschwenkung der Achsen im Zugbetrieb eines mit dem Getriebe ausgeführten Fahrzeugantriebsstranges und durch eine damit einhergehende Verringerung der reziproken Getriebeübersetzung verändert, was einem Verschwenken des Hydrostaten nach kurz entspricht.

Im Betriebsmodus der Positionsregelung wird ein Anker eines Proportionalmagneten der Positionsregelventileinheit durch Aufprägung eines durch einen Stromregler geregelten Ist-Stroms in eine Spule gezogen. Durch die sich einstellende Magnetkraft wird ein Schieber der als 4/2-Regelventil ausgeführten Positionsregelventileinheit verstellt. Im Bereich einer Zuleitung liegt der Niederdruck eines im Wesentlichen druckfreien Bereiches bzw. eines Tankbereiches an der Positionsregelventileinheit an. Im Bereich einer weiteren Zuleitung liegt der im Bereich der Hydraulikmaschinen wirkende Hochdruck an der Positionsregelventileinheit an. Die Position des Ventilschiebers der Positionsregelventileinheit definiert, ob der Niederdruck oder der Hochdruck in Richtung der Hochdruckregelventileinheit weitergeleitet wird.

Die Position des Ventilschiebers der Hochdruckregelventileinheit wird durch eine am Ventilschieber angreifende Gesamtkraftkomponente bestimmt, die sich aus der Federkraft einer Federeinrichtung und im Bereich von Wirkflächen des Ventilschiebers angreifenden Drücken zusammensetzt. Dabei liegt der im Bereich der Hydraulikmaschinen wirkende Hochdruck im Bereich einer ersten Wirkfläche des Ventilschiebers der Hochdruckregelventileinheit an. Des Weiteren ist an einer weiteren Wirkfläche des Ventilschiebers der Hochdruckregelventileinheit ein Steuerdruck anlegbar, der beispielsweise durch einen Steuerdruckventilstrom variierbar ist.

Im Betriebsmodus der Positionsregelung wird der Ventilschieber der Hochdruckregelventileinheit von der Federkraft in seine vollständig umgeschobene Endlage verstellt, womit der Kolben der Kolben-Zylinder-Einrichtung ausschließlich durch die Vorgabe des im Bereich der Positionsregelventileinheit eingestellten Druckes verstellt wird. Die Bewegung des Kolbens der Kolben-Zylinder-Einrichtung wird über einen mechanischen Rückmeldemechanismus an die Positionsregelventileinheit zurückgemeldet, womit sich der Ventilschieber der Positionsregelventileinheit in eine stabile Position bewegt.

Während des Betriebsmodus der Hochdruckregelung wird der Ventilschieber der Hochdruckregelventileinheit von den im Bereich der Wirkflächen angreifenden Drücken entgegen der Federkraft der Federeinrichtung in seine zweite umgeschobene Endlage verstellt und die Wirkungsweise der Positionsregelventileinheit umgekehrt.

Um die Hubvolumina der beiden Hydraulikmaschinen in gewünschtem Umfang einstellen zu können, ist über eine komplexe Betätigungslogik zu gewährleisten, dass der Ventilschieber der Positionsregelventileinheit in Bezug auf den Ventilschieber der Hochdruckregelventileinheit über den gesamten Betriebsbereich jeweils für die Funktionsweise der Vorrichtung geeignete Stellungen einnimmt, in welchen der steuernde Hydraulikfluidvolumenstrom jeweils die gewünschte Systemreaktion auslöst und beispielsweise eine unerwünschte Beschneidung der Dynamik oder eine Umkehr des Hydraulikfluidvolumenstromes vermieden wird.

Die für die Ermittlung der geeigneten Ventilstellung der Positionsregelventileinheit vorgesehene komplexe Logik berücksichtigt sowohl messbare Betriebsgrößen eines mit den einen Hydrostaten bildenden Hydraulikmaschinen ausgeführten Getriebes als auch getriebeinterne Größen, wie eine aktuelle Getriebegesamtübersetzung, interne Übersetzungen und die Abtriebsdrehzahl.

Problematisch dabei ist jedoch, dass zur Darstellung der jeweils gewünschten bzw. erforderlichen Systemreaktion an die Logik sehr hohe Anforderungen in Bezug auf Robustheit und Geschwindigkeit gestellt werden.

Der vorliegenden Erfindung liegt daher die Aufgabe zugrunde, eine konstruktiv einfache und mit geringem Aufwand betätigbare Vorrichtung zum Variieren der Hubvolumina einer ersten Hydraulikmaschine und einer zweiten Hydraulikmaschine zur Verfügung zu stellen.

Erfindungsgemäß wird diese Aufgabe mit einer Vorrichtung mit den Merkmalen des Patentanspruches 1 gelöst.

Bei der erfindungsgemäßen Vorrichtung zum Variieren der Hubvolumina einer ersten Hydraulikmaschine und einer zweiten Hydraulikmaschine, deren Hubvolumina jeweils in Abhängigkeit von Schwenkstellungen von verstellbaren Achsen der Hydraulikmaschinen stehen und die über Leitungen miteinander verbindbar sind, sind die Achsen mit einer Kolben-Zylinder-Einrichtung koppelbar. Die Kolben-Zylinder-Einrichtung ist im Bereich von Wirkflächen mit den im Bereich der Regelventileinheit einstellbaren Drücken zum Verschwenken der Achsen beaufschlagbar, wobei die Drücke im Bereich der Hydraulikmaschinen über die Regelventileinheit begrenzbar sind und die Regelventileinheit über eine Ventileinrichtung jeweils mit der Leitung koppelbar ist, in der der höhere Druck vorliegt.

Erfindungsgemäß ist eine Einrichtung zum Bestimmen eines aktuell vorliegenden Ist-Druckes stromauf der Regelventileinheit und stromauf der Ventileinrichtung im Bereich einer die Hydraulikmaschinen verbindenden Leitung vorgesehen. Zusätzlich ist die Regelventileinrichtung in Abhängigkeit der über die Einrichtung bestimmbaren Ist-Druckwerte betätigbar.

Die erfindungsgemäße Ausführung der Vorrichtung mit der Einrichtung zum Bestimmen des aktuell vorliegenden Ist-Druckes stromauf der Regelventileinheit und zumindest im Bereich einer die Hydraulikmaschinen verbindenden Leitung sowie die zusätzliche erfindungsgemäße Betätigung der Regelventileinheit in Abhängigkeit der über die Einrichtung bestimmbaren Ist-Druckwerte bietet auf einfache Art und Weise die Möglichkeit, den Betriebsmodus der Positionsregelung und den Betriebsmodus der Hochdrucklimitierung mit einer im Vergleich zu aus dem Stand der Technik bekannten Lösung einfacher ausgeführten Regelventileinheit zu realisieren. Das bedeutet, dass die Regelventileinheit beispielsweise lediglich mit der Positionsregelventileinheit der aus dem Stand der Technik bekannten Lösung ausführbar ist und die Funktion der Hochdruckregelventileinheit auf Basis der Informationen der Einrichtung zum Bestimmen des aktuell vorliegenden Ist-Druckes im Bereich stromauf der Regelventileinheit und zumindest im Bereich einer die Hydraulikmaschinen verbindenden Leitung sowie einer darauf aufbauenden, geeigneten Betätigung der Regelventileinheit durchführbar ist.

Über die Einrichtung zum Bestimmen des Ist-Druckes, die beispielsweise Hochdrucksensoren im Bereich stromauf der Regelventileinheit und zumindest im Bereich einer die Hydraulikmaschinen verbindenden Leitungen oder nur einen Hochdrucksensor und einen Druckseitenschalter in den angegebenen Bereichen umfasst, ist eine Lastfühligkeit eines mit den Hydraulikmaschinen ausgeführten Getriebes unabhängig von der Druckseite während eines Schub- oder Zugbetriebes eines mit einem solchen Getriebe ausgeführten Fahrzeugantriebsstranges der Hydraulikmaschinen und unabhängig von dem jeweils eingelegten Fahrbereich im Getriebe realisierbar. Unter Schubbetrieb wird beispielsweise eine Bergabfahrt verstanden, bei welcher ausgehend vom Abtrieb bzw. von den Rädern im Schubbetrieb Drehmoment in den Fahrzeugantriebsstrang eingeleitet wird. Hierbei wird das Drehmoment nicht zwangsweise in Richtung des Antriebsmotors geführt.

Dabei sind zur Darstellung der Lastfühligkeit der Betrag und der Verlauf des stromauf der Regelventileinheit über die Einrichtung ermittelten Druckes zur Darstellung der Lastfühligkeit verwendbar. Zusätzlich ist die Druckseite der Hydraulikmaschinen über die Ermittlung des Ist-Druckes im Bereich der die Hydraulikmaschinen verbindenden Leitung bestimmbar und in Verbindung mit dem Ist-Druck im Bereich stromauf der Regelventileinheit über eine geeignete Softwarelogik auswertbar, um zwischen einem Zug- und einem Schubbetrieb unterscheiden zu können.

In Abhängigkeit der über die Einrichtung zur Verfügung stehenden Informationen ist die Übersetzung eines mit den Hydraulikmaschinen und der erfindungsgemäßen Vorrichtung ausgeführten Getriebes gezielt nach kurz oder lang verstellbar und über den gesamten Betriebsbereich des Getriebes im Bereich der Hydraulikmaschinen eine Hochdrucklimitierung realisierbar.

Dabei wird im Betriebsmodus der Hochdrucklimitierung bzw. der Hochdruckregelung im Zugbetrieb eines mit den Hydraulikmaschinen und der erfindungsgemäßen Vorrichtung ausgeführten Fahrzeugantriebsstranges der Betriebszustand der Regelventileinheit verändert, um die Gesamtübersetzung des Getriebes nach kurz zu verstellen, während die Gesamtübersetzung des Getriebes im Schubbetrieb über die Regelventileinheit nach lang verstellt wird. Dabei wird unter dem Begriff "nach lang verstellen" vorliegend eine Erhöhung der reziproken Getriebegesamtübersetzung eines mit den einen Hydrostaten ausbildenden Hydraulikmaschinen ausgeführten Getriebes verstanden, während der Begriff "nach kurz verstellen" gleichbedeutend ist mit die reziproke Getriebegesamtübersetzung zu verringern.

Über die Einrichtung zum Bestimmen eines aktuell vorliegenden Ist-Druckes im Bereich stromauf der Regelventileinheit und zumindest im Bereich einer die Hydraulikmaschinen verbindenden Leitungen ist eine robuste und einfache Erkennung der Druckseiten der beiden Hydraulikmaschinen möglich, womit Schub- und Zugfälle unterschieden werden können. Dies bildet die Grundlage für den Betriebsmodus der Hochdrucklimitierung bzw. der Hochdruckregelung und somit die Lastfühligkeit des Getriebes unabhängig von den Druckseiten der Hydraulikmaschinen und dem jeweils eingelegten Fahrbereich eines mit den Hydraulikmaschinen ausgeführten stufenlosen Getriebes.

Aufgrund der Möglichkeit, die Regelventileinheit im Vergleich zu der aus dem Stand der Technik bekannten Lösung einfacher ausführen zu können und vorzugsweise auf die Hochdruckregelventileinheit verzichten zu können, benötigt die erfindungsgemäße Vorrichtung keinerlei Hardware zur Betätigung der Hochdruckregelventileinheit, wie eines Druckreglers oder einer Verkabelung. Darüber hinaus werden dann auch Kalibrier- und Diagnosefunktionen für die Hochdruckregelventileinheit mit umfangreichen Fallunterscheidungen nicht mehr benötigt.

Des Weiteren treten durch den möglichen Wegfall der Hochdruckregelventileinheit auch keine funktionskritischen Ventilstellungen zwischen der Hochdruckregelventileinheit und der Positionsregelventileinheit auf, die bei der aus dem Stand der Technik bekannten Vorrichtung über eine entsprechend aufwändige Logik vermieden werden sollen. Die erfindungsgemäße Lösung ist ohne mechanische Mitkopplung ausführbar und es wird eine Limitierung der Systemdynamik durch die jeweils andere Ventileinheit, beispielsweise durch positive Überdeckung oder auch einen geringen Öffnungsquerschnitt, verhindert. Darüber hinaus reduziert sich auch die Komplexität der Ansteuerung der Regelventileinheit mit nur einer der Positionsregelventileinheit entsprechenden Ventileinheit, da zur Umsetzung der gewünschten Funktionalität nur noch eine Ventileinheit zu bestromen ist.

Aufgrund der erfindungsgemäßen Ausführung der Vorrichtung ist die Hochdrucklimitierungsfunktion auch nicht vom Systemdruck abhängig. So besteht beispielsweise bei der aus dem Stand der Technik bekannten Lösung, die vom Systemdruck abhängig ist, die Möglichkeit, dass das Einregeln sehr geringer Drücke zum Verstellen der Achsen der Hydraulikmaschinen im Bereich der Kolben-Zylinder-Einrichtung nicht in gewünschtem Umfang umsetzbar ist.

Der Grund hierfür ist die Abhängigkeit des an der Hochdruckregelventileinheit anliegenden Steuerdruckes vom Systemdruck, da der Systemdruck der Versorgungsdruck des Druckreglers zur Erzeugung des an der Hochdruckregelventileinheit anliegenden Steuerdruckes ist. Problematisch ist es, wenn der Systemdruck bzw. der Versorgungsdruck des Druckreglers zur Erzeugung des an der Hochdruckregelventileinheit anliegenden Steuerdruckes den maximalen Ansteuerbereich des Steuerdruckes unterschreitet, da die Hochdruckregelventileinheit in diesem Bereich nicht mehr betreibbar ist. Ein derart reduzierter Systemdruck liegt beispielsweise bei zu geringen Antriebsdrehzahlen einer das hydraulische System mit Hydraulikfluidvolumen versorgenden Hydraulikpumpe und/oder einer zu hohen Viskosität des Hydraulikfluids, beispielsweise während eines Kaltstarts, vor.

Des Weiteren ist von Vorteil, dass die verstellbaren Achsen der Hydraulikmaschinen, die beispielsweise über ein Doppeljoch miteinander verbunden sein können, über den gesamten Betriebsbereich der Hydraulikmaschinen und des damit ausgeführten Getriebes immer über die gleiche Ventileinheit angesteuert und verschwenkt werden. Dadurch ist der Durchgriff auf die Stellung der Achsen bzw. des Doppeljochs und damit auf die Übersetzung des mit den Hydraulikmaschinen ausgeführten Getriebes immer direkt gewährleistet und beispielsweise eine Korrektur der Schwenkstellung während eines Fahrbereichswechsels im Getriebe nutzbar.

Da die Bewegung des Ventilschiebers der Positionsregelventileinheit im Gegensatz zu der Bewegung des Ventilschiebers der Hochdruckregelventileinheit nicht mechanisch vom anliegenden Druck beeinflusst wird, besteht bei der erfindungsgemäßen Vorrichtung die Möglichkeit, eine beliebige Filterung von Druckschwankungen, die zu einer Ansteuerung der Übersetzung führen, zu realisieren. Eine situationsabhängige Filterung ist beispielsweise während eines Reversiervorganges und eines Fahrbereichswechsels vorteilhaft.

Zusätzlich kann es vorgesehen sein, dass der vorliegende Ist-Druck im Bereich einer die Hydraulikmaschinen verbindenden Leitung und stromab einer mit beiden die Hydraulikmaschinen verbindenden Leitungen in Wirkverbindung stehenden und vorzugsweise als Wechselventil ausgeführten Ventileinrichtung über die Einrichtung ermittelt wird. Dabei wird der stromab der Ventileinrichtung vorgesehene Leitungsbereich über die Ventileinrichtung immer mit der die Hydraulikmaschinen verbindenden Leitung gekoppelt, in der aktuell der höhere Druck vorliegt.

Alternativ hierzu kann es auch vorgesehen sein, dass der Ist-Druck über die Einrichtung im Bereich der Leitungen, die die Hydraulikmaschinen miteinander verbinden, oder zumindest in einem hiermit verbundenen Leistungsbereich ermittelt wird. Dann ist zur Unterscheidung zwischen einem Schub- und einem Zugbetrieb zunächst das Maximum der Drücke in den Leitungen zu bestimmen und anschließend die gewünschte Hochdrucklimitierung realisierbar.

Bei einer konstruktiv besonders einfachen Ausführungsform der erfindungsgemäßen Vorrichtung ist die Regelventileinheit als 4/2-Regelventil ausgebildet, dessen Ventilschieber von einer variierbaren Stellkraft entgegen einer vorzugsweise veränderlichen weiteren am Ventilschieber angreifenden Stellkraft zwischen einer ersten Endlage in Richtung einer zweiten Endlage verstellbar ist.

Ist ein Kolben der vorzugsweise doppelt wirkenden Kolben-Zylinder-Einrichtung mit dem Ventilschieber der Regelventileinheit wirkverbunden und variiert die weitere am Ventilschieber angreifende Stellkraft in Abhängigkeit einer Stellung des Kolbens, bewegt sich der Ventilschieber der Regelventileinheit mit geringem Aufwand in eine stabile Position.

Bei einer konstruktiv einfachen und kostengünstigen Ausführungsform der erfindungsgemäßen Vorrichtung ist die am Ventilschieber der Regelventileinheit angreifende Stellkraft in Abhängigkeit einer im Bereich einer Einrichtung ermittelbaren und in Abhängigkeit der Hubvolumina der Hydraulikmaschinen variierenden Übersetzung einer mit den Hydraulikmaschinen ausgeführten Getriebeeinrichtung veränderbar, da auf eine mechanische Rückmeldungsverbindung zwischen der Kolben-Zylinder-Einrichtung und der Regelventileinheit verzichtet werden kann. Des Weiteren ist im Vergleich zur mechanischen Verbindung zwischen der Kolben-Zylinder-Einrichtung und der Regelventileinheit eine verbesserte Auflösung der Ansteuereinheit darstellbar, da sich der Hochdruck im Bereich der Hydraulikmaschinen bei der Verwendung eines mechanisch gekoppelten Systems mit Rückmeldung in bestimmten Situationen sehr stark bei nur geringer Variation der Betätigung der Regelventileinheit ändert.

Bei der letztbeschriebenen Ausführung der erfindungsgemäßen Vorrichtung ohne mechanische Rückkopplung zwischen dem Kolben und der Regelventileinheit ist der gesamte Kraftregelbereich eines Proportionalmagnets für die hochaufgelöste Einstellung des Volumenstroms im Bereich der Regelventileinheit nutzbar. Daraus ergeben sich besonders dann Vorteile, wenn die Regelventileinheit zur Einstellung der Lastfühligkeit eines mit den Hydraulikmaschinen ausgeführten Getriebes benutzt wird. Darüber hinaus ist auch das Systemverhalten exakter vorhersagbar, da der Volumenstrom direkt im Bereich der Regelventileinheit und ohne Einflüsse der Verschwenkung des Hydrostaten einstellbar ist.

Sind die Hubvolumina der Hydraulikmaschinen oberhalb eines vorzugsweise variierbaren Druckgrenzwertes im Bereich der die Hydraulikmaschinen miteinander verbindenden Leitungen durch eine entsprechende Einstellung der am Ventilschieber der Regelventileinheit angreifenden Stellkraft auf Werte führbar, zu denen der Druck in den Leitungen wenigstens annähernd ein dem Druckgrenzwert entsprechendes Niveau aufweist, ist der Betriebsmodus der Hochdrucklimitierung bzw. der Hochdruckregelung mit einem Sicherheitsabstand zu einem unter Umständen Schädigungen im Bereich der Hydraulikmaschinen und der diese betätigenden Bauteile in gewünschtem Umfang durchführbar und unzulässig hohe Druckwerte im Hydrauliksystem mit hoher Wahrscheinlichkeit vermeidbar.

Des Weiteren ist neben dem Getriebeschutz auch eine Absenkung des maximal im Bereich der Hydraulikmaschinene wirkenden Hochdrucks möglich, womit beispielsweise ein Handling eines Radladers während eines Betriebes im Haufwerk oder dergleichen, vorzugsweise durch Vermeidung durchdrehender Räder, verbesserbar ist. Eine Lastfühligkeit eines CVT-Getriebes ist in Verbindung mit einer gezielten Soll-Druckvorgabe, beispielsweise durch einen Fahrerwunsch, die Vorgabe eines Fahrstrategierechners oder auch in Abhängigkeit eines notwendigen Bremsdruckes für einen Getriebeschutz, im gewünschten bzw. erforderlichen Umfang erzielbar. Generell ist durch die einfach zur Verfügung stehende und betriebszustandsabhängig einstellbare Hochdrucklimitierung ein feinfühliges Handling, beispielsweise im Haufwerk, erzielbar.

Ist der Druckgrenzwert kleiner als oder gleich einem im Bereich der die Hydraulikmaschinen verbindenden Leitungen einzustellenden Soll-Druckwert, der zur Übertragung eines definierten Drehmomentes zwischen den Hydraulikmaschinen angefordert ist, ist einerseits die Funktionsweise eines mit den Hydraulikmaschinen und der erfindungsgemäßen Vorrichtung ausgeführten Getriebes und somit eines wiederum damit ausgeführten Fahrzeuges bei gleichzeitiger Vermeidung schädigender Betriebszustände gewährleistet sowie die gewünschte Lastfühligkeit realisierbar.

Ist eine Verstellgeschwindigkeit der Hubvolumina der Hydraulikmaschinen oberhalb des Druckgrenzwertes im Bereich der die Hydraulikmaschinen miteinander verbindenden Leitungen in Abhängigkeit einer Abweichung zwischen einem Ist-Druckwert und dem Soll-Druckwert im Bereich der die Hydraulikmaschinen verbindenden Leitungen variierbar, sind die Vorrichtung unter Umständen schädigende Betriebszustände, d.h. unzulässig hohe Druckwerte im System, innerhalb kurzer Betriebszeiten ausregelbar, während geringe Abweichungen zwischen dem Ist-Druckwert und dem vorgegebenen Soll-Druckwert mit geringerer Aggressivität reduzierbar sind, ohne einen Fahrkomfort wesentlich zu beeinträchtigen.

Bei einer weiteren vorteilhaften Ausführungsform der erfindungsgemäßen Vorrichtung ist eine Verstellgeschwindigkeit der Hubvolumina der Hydraulikmaschinen oberhalb des Druckgrenzwertes im Bereich der die Hydraulikmaschinen miteinander verbindenden Leitungen in Abhängigkeit eines Gradienten des Verlaufs der Differenz zwischen dem Ist-Druck und der Soll-Hochdruckvorgabe im Bereich der die Hydraulikmaschinen verbindenden Leitungen variierbar. Damit ist gewährleistet, dass bei größeren Gradienten entsprechend ein stärkerer Eingriff durchführbar ist als bei geringeren Gradienten und das System jeweils vor unzulässigen Betriebszuständen schützbar ist.

In Abhängigkeit der jeweils verwendeten Ausführungsform der erfindungsgemäßen Vorrichtung sind sowohl der Eintrittspunkt als auch die Aggressivität bzw. die Verstellgeschwindigkeit der Hubvolumina der Hydraulikmaschinen durch entsprechende Maßnahmen, beispielsweise softwareseitig, beliebig einstellbar. Dadurch besteht die Möglichkeit, die Ventilcharakteristik der Regelventileinheit betriebszustandsabhängig zu variieren bzw. an den jeweils vorliegenden Anwendungsfall in gewünschtem Umfang anpassen zu können. Dies ist bei der aus dem Stand der Technik bekannten Lösung, die neben der Positionsregelventileinrichtung mit der Hochdruckregelventileinrichtung ausgeführt ist, nur durch konstruktive Maßnahmen möglich. Somit stellt die erfindungsgemäße Vorrichtung eine sehr flexible Lösung dar, die ohne aufwändige und zeitintensive Konstruktionsänderungen an verschiedene Anwendungsfälle anpassbar ist.

Über die erfindungsgemäße Vorrichtung besteht beispielsweise die Möglichkeit, ein im Bereich eines Abtriebs eines mit der erfindungsgemäßen Vorrichtung, den zugeordneten Hydraulikmaschinen und einem Getriebe ausgebildeten Fahrzeugantriebsstranges zur Verfügung stehendes Zugkraftangebot in Abhängigkeit eines Kundenwunsches, der aktuell vorliegenden Fahrsituation, dem aktuell im Getriebe eingelegten Fahrbereich, einem Verzögerungswunsch eines Fahrers und/oder dem aktuellen Zustand des Getriebes, d.h. in Abhängigkeit eines Zug- oder Schubbetriebes oder ob die Hochdrucklimitierungsfunktion betreten oder verlassen wird, zu limitieren.

Sowohl die in den Patentansprüchen angegebenen Merkmale als auch die in den nachfolgenden Ausführungsbeispielen der erfindungsgemäßen Vorrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen der erfindungsgemäßen Vorrichtung ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1: ein vereinfachtes Hydraulikschema des ersten Ausführungsbeispiels der erfindungsgemäßen Vorrichtung;
- Fig. 2: eine Fig. 1 entsprechende Darstellung eines zweiten Ausführungsbeispiels der erfindungsgemäßen Vorrichtung;
- Fig. 3: eine schematisierte Darstellung des Wirkungsbereiches einer über die erfindungsgemäße Vorrichtung darstellbaren Hochdrucklimitierungsfunktion;
- Fig. 4: eine schematisierte Darstellung der Abhängigkeit der Verstellgeschwindigkeit der Hubvolumina von in Fig. 1 und Fig. 2 gezeigten Hydraulikmaschinen in Abhängigkeit einer Abweichung zwischen einem Ist-Druck und einem Soll-Druck; und
- Fig. 5: eine Fig. 4 entsprechende Darstellung eines Ist-Druckverlaufes und eines Soll-Druckverlaufes, anhand welchen eine mögliche Variation der Verstellgeschwindigkeit der Hubvolumina der Hydraulikmaschinen gemäß Fig. 1 und Fig. 2 näher erläutert wird.

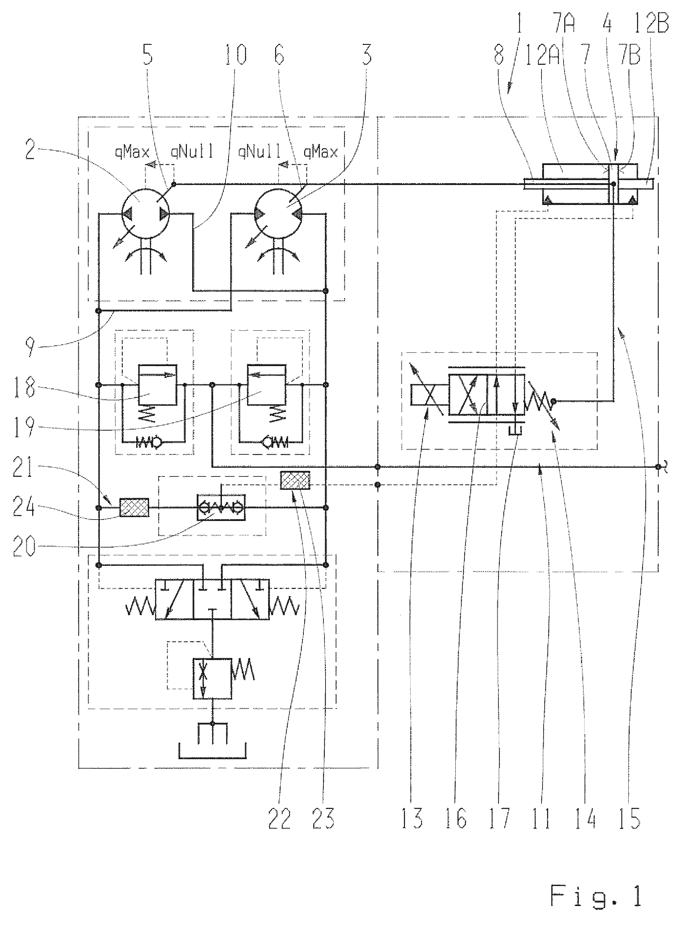

In Fig. 1 ist eine Vorrichtung 1 zum Variieren der Hubvolumina einer ersten Hydraulikmaschine 2 und einer zweiten Hydraulikmaschine 3 gezeigt, die als Schrägachsenkolbenmaschinen ausgebildet sind und deren Hubvolumina jeweils in Abhängigkeit von Schwenkstellungen von über eine doppelt wirkende Kolben-Zylinder-Einrichtung 4 gemeinsam verstellbaren Achsen 5, 6 der Hydraulikmaschinen 2, 3 stehen. Ein Kolben 7 der Kolben-Zylinder-Einrichtung 4 ist über eine Kolbenstange 8 mit den Achsen 5, 6 der Hydraulikmaschinen 2, 3 wirkverbunden.

Die Hydraulikmaschinen 2, 3 sind über Leitungen 9, 10 verbunden und stellen eine Hydrostateinrichtung dar, die einen Teil eines CVT-Getriebes bilden. Über die Hydraulikmaschinen 2, 3 ist ein Teil eines von einer Antriebsmaschine eines Fahrzeugantriebsstranges anliegenden Drehmomentes hydrostatisch in Richtung eines Abtriebs führbar. Solche CVT-Getriebe werden beispielsweise in Radladern, Skiddern oder anderen Baumaschinen sowie Forstmaschinen eingesetzt, bei welchen Getriebe mit stufenlos veränderbaren Übersetzungen bevorzugt eingesetzt werden und über die eine so genannte Lastfühligkeit darstellbar ist.

Die die Hydraulikmaschinen 2, 3 umfassende Hydrostateinheit stellt einen ersten Leistungszweig eines CVT-Getriebes dar, der üblicherweise mit einer mechanischen Einrichtung gekoppelt ist, die einen zweiten Leistungszweig eines CVT-Getriebes ausbildet, über den wiederum der jeweils andere Teil des Drehmomentes der Antriebsmaschine zwischen einem Getriebeeingang und einem Getriebeausgang führbar ist. Die beiden Leistungszweige stehen vorzugsweise über eine Planetengetriebeeinrichtung in Wirkverbindung. Derartige CVT-Getriebe sind vorzugsweise mit mehreren Fahrbereichen für Vorwärts- und Rückwärtsfahrt ausgeführt, welche jeweils über wenigstens ein abzuschaltendes Schaltelement und wenigstens ein zuzuschaltendes Schaltelement ein- und auslegbar sind und innerhalb welchen eine Übersetzung des CVT-Getriebes durch Verändern der Hubvolumina der Hydraulikmaschinen 2, 3 stufenlos variierbar ist. Um die Fahrbereichswechsel synchron durchführen zu können, sind die beiden Hydraulikmaschinen 2 und 3 jeweils sowohl als Pumpe als auch als Motor betreibbar.

Nachfolgend wird die Funktion der Vorrichtung 1 in Verbindung mit einem CVT-Getriebe beschrieben, mittels welchem jeweils zwei Fahrbereiche für Vorwärts- und Rückwärtsfahrt darstellbar sind. Weitere Bereiche sind möglich.

Bei im CVT-Getriebe eingelegten ersten Fahrbereich und gleichzeitig stillstehendem Fahrzeug befindet sich die Vorrichtung 1 in einer so genannten Ruhestellung und die erste Hydraulikmaschine 2 wird als Pumpe betrieben, während sich die zweite Hydraulikmaschine 3 im Motorbetrieb befindet. Das Fördervolumen der ersten Hydraulikmaschine 2 ist in diesem Betriebszustand minimal und das Schluckvolumen der zweiten Hydraulikmaschine 3 ist maximal, wobei die Achsen 5 und 6 der beiden Hydraulikmaschinen jeweils die in Fig. 1 dargestellte Schwenkposition aufweisen.

Der Kolben-Zylinder-Einrichtung 4 ist vorliegend eine Regelventileinheit 11 zugeordnet, die ein Positionsregelventil darstellt und als 4/2-Regelventil ausgeführt ist. An der Regelventileinheit 11 liegt jeweils ein im Bereich der Hydraulikmaschinen 2 und 3 bzw. im Bereich der Leitungen 9 und 10 wirkender hydraulischer Druck an, der bei entsprechender Betätigung der Regelventileinheit 11 in einem ersten Kolbenraum 12A und in einem zweiten Kolbenraum 12B der Kolben-Zylinder-Einrichtung 4 an Wirkflächen 7A und 7B des Kolbens 7 anlegbar ist. Die Regelventileinheit 11 ist vorliegend über eine Ventileinrichtung 20 jeweils mit der Leitung 9 oder 10 gekoppelt, in der der höhere Druck anliegt.

Die Regelventileinheit 11 wird bei den in der Zeichnung dargestellten Ausführungsbeispielen der Vorrichtung 1 über einen Proportionalmagneten 13 betätigt, wobei die Ansteuerung der Regelventileinheit 11 auch über ein proportional verstellbares Steuerdruckventil erfolgen kann.

Die Betätigungskraft des Proportionalmagneten 13 wirkt einer Federkraft einer Federeinrichtung 14 entgegen, deren Federkraft in Abhängigkeit einer mechanischen Kopplung 15 der Federeinrichtung 14 mit dem Kolben 7 der Kolben-Zylinder-Einrichtung 4 variiert. Über die mechanische Kopplung 15 wird die Position des Kolbens 7 der Kolben-Zylinder-Einrichtung 4 auf die Regelventileinheit 11 bzw. deren Ventilschieber 16 rückgemeldet und die Betätigung der beiden Hydraulikmaschinen 2 und 3 geregelt durchgeführt.

Ist die im Bereich des Proportionalmagneten 13 erzeugte Stellkraft größer als die am Ventilschieber 16 der Regelventileinheit 11 angreifende Federkraft der Federeinrichtung 14, wird der im Bereich der Hydraulikmaschinen 2, 3 vorliegende Druck bzw. Hochdruck in der Leitung 9 bzw. in der Leitung 10 in einer von der in Fig. 1 dargestellten Position des Ventilschiebers 16 abweichenden Stellung des Ventilschiebers 16 der Regelventileinheit 11 in den zweiten Kolbenraum 12B der Kolben-Zylinder-Einrichtung 4 geführt, während Hydraulikfluid aus dem ersten Kolbenraum 12A über die Regelventileinheit 11 in einen drucklosen Bereich 17 bzw. einen Tank abgelassen wird.

Dies führt dazu, dass der Kolben 7 ausgehend von der in Fig. 1 dargestellten Position gemeinsam mit der Kolbenstange 8 verschoben wird und das Volumen des ersten Kolbenraumes 12A verkleinert und das Volumen des zweiten Kolbenraums 12B vergrößert wird. Durch die Verstellung der Kolbenstange 8 wird das Fördervolumen der als Pumpe betriebenen ersten Hydraulikmaschine 2 vergrößert und das Schluckvolumen der als Motor betrieben zweiten Hydraulikmaschine 3 entsprechend verringert. Entspricht die im Bereich des Proportionalmagneten 13 erzeugte Kraft der Federkraft der Federeinrichtung 14, ist die Position des Kolbens 7 eingeregelt.

Die jeweilige Position des Kolbens 7 der Kolben-Zylinder-Einrichtung 4 bestimmt jeweils das Übersetzungsverhältnis zwischen den Hubvolumina der jeweils als Pumpe betriebenen Hydraulikmaschine 2 oder 3 und der jeweils als Motor betriebenen Hydraulikmaschine 3 oder 2. Ist die aus den beiden Hydraulikmaschinen 2 und 3 gebildete Hydrostateinrichtung an ein sekundär gekoppeltes Leistungsverzweigungsgetriebe angebaut, wird damit die Fahrgeschwindigkeit eines mit diesem Getriebe ausgeführten Fahrzeuges stufenlos verstellt bzw. geregelt.

Über die Regelventileinheit 11 ist auch eine stufenlose Drucklimitierungsfunktion über den gesamten Betriebsbereich der Hydrostatmaschinen bei entsprechender Ansteuerung darstellbar. Ziel der Drucklimitierungsfunktion ist es, dass die Druckbegrenzung im Bereich der Hydraulikmaschinen 2 und 3 nur in Notfällen im Bereich von Hochdruckbegrenzungsventilen 18, 19 begrenzt wird und Hydraulikfluid im Bereich der Hochdruckbegrenzungsventile 18 und 19 von der Hochdruckseite zur Niederdruckseite abspritzt. Bei einer Druckbegrenzung über die Hochdruckbegrenzungsventile 18 und 19 treten Verlustleistungen auf, die das aus den beiden Hydraulikmaschinen 2 und 3 bestehende Hydrostatgetriebe sehr schnell überhitzen und die einen Kraftstoffverbrauch einer vorzugsweise als Brennkraftmaschine ausgeführten Antriebsmaschine eines mit dem CVT-Getriebe ausgeführten Fahrzeugantriebsstranges unnötig erhöhen.

Die Hochdruckbegrenzungsventile 18 und 19 sind in erster Linie zur Systemabsicherung während hochdynamischer Laständerungen vorgesehen, da diese mit einer kürzeren Ansprechzeit als die Regelventileinheit 11 ausgeführt sind. Damit werden unerwünschte Beschädigungen im hydraulischen System der Vorrichtung 1 vermieden, die durch die Regelventileinheit 11 alleine aufgrund des langsameren Ansprechverhaltens nicht verhinderbar sind.

Über die Drucklimitierungsfunktion soll ein maximaler Hochdruck im Bereich der Hydraulikmaschinen 2 und 3 auf ein geringeres Druckniveau als der Öffnungsdruck der Hochdruckbegrenzungsventile 18, 19 begrenzt werden. Liegt die Ansprechgrenze der Hochdruckbegrenzungsventile 18, 19 beispielsweise bei 500 bar, wird der Proportionalmagnet 13 derart bestromt, dass der Kolbenraum 12A oder der Kolbenraum 12B mit Druck beaufschlagt wird und die Hubvolumina der Hydraulikmaschinen 2 und 3 in einer solchen Weise verändert werden, dass der Hochdruck im System unterhalb kritischer Druckwerte geführt wird.

Ab dem Ansprechzeitpunkt der Regelventileinheit 11 wird die Abtriebsdrehzahl der jeweils als Motor betriebenen Hydraulikmaschine 2 oder 3 verringert bzw. dessen Schluckvolumen vergrößert. Gleichzeitig wird das Fördervolumen der jeweils als Pumpe betriebenen Hydraulikmaschine 3 oder 2 reduziert und damit die Leistungsaufnahme herabgesetzt. Die Hochdrucklimitierung wird über die Vorrichtung 1 über den gesamten Betriebsbereich eines CVT-Getriebes, d.h. über alle Fahrbereiche, zur Verfügung gestellt.

Um die Hochdrucklimitierungsfunktion in gewünschtem Umfang umsetzen zu können, weist die Vorrichtung 1 eine Einrichtung 22 zum Bestimmen eines aktuell vorliegenden Ist-Druckes stromauf der Regelventileinheit 11 im Bereich zwischen der Ventileinrichtung 20 und der Regelventileinheit 11 und stromauf der Ventileinrichtung 20 in einem mit der Leitung 9 in Verbindung stehenden Leitungsbereich 21 auf. Die Einrichtung 22 ist vorliegend mit zwei Hochdrucksensoren 23, 24 ausgebildet, um über die eine Lastfühligkeit eines CVT-Getriebes unabhängig von der Druckseite der Hydraulikmaschinen 2 und 3 während eines Schub- oder Zugbetriebes und dem jeweils im Bereich des CVT-Getriebes eingelegten Fahrbereiches zu realisieren.

Hierfür werden über den Hochdrucksensor 23 der Betrag und der Verlauf des Ist-Druckes im Bereich der Leitung 9 oder 10 ermittelt. Des Weiteren werden in Verbindung mit dem Hochdrucksensor 24 die Druckseiten der Hydraulikmaschinen 2 und 3 bestimmt und einer in einem Steuergerät hinterlegten Softwarelogik als Information bzw. als Eingangsgrößen zur Verfügung gestellt. Über die Softwarelogik werden Zug- und Schubfälle unterschieden und in Abhängigkeit des jeweils vorliegenden Betriebszustandes die Übersetzung des CVT-Getriebes gezielt nach kurz oder lang verstellt, womit über den gesamten Betriebsbereich bzw. in allen Fahrsituationen eine Limitierung des Hochdruckes im Bereich der Hydraulikmaschinen 2 und 3 erzielbar ist. Dabei gilt im Allgemeinen, dass zur Hochdrucklimitierung im Schubbetrieb die Regelventileinheit 11 durch eine entsprechende softwareseitig eingestellte Bestromung des Proportional magneten 13 derart zu betätigen ist, dass die reziproke Getriebeübersetzung des CVT-Getriebes erhöht wird, während im Schubbetrieb die reziproke Getriebeübersetzung zur Hochdrucklimitierung zu verringern ist bzw. das CVT-Getriebe nach kurz zu verstellen ist.

Grundsätzlich gilt, dass zur Umsetzung der Hochdrucklimitierungsfunktion sowohl der Betrag des Hochdrucks als auch die Information über den Schub- oder Zugzustand zur Verfügung zu stellen ist. Hierfür ist es jedoch nicht zwingend erforderlich, dass die Einrichtung 22 mit zwei Hochdrucksensoren ausgeführt ist. Es besteht auch die Möglichkeit, die Einrichtung 22 mit nur einem Hochdrucksensor und einem Druckseitenschalter auszubilden.

Darüber hinaus besteht auch die Möglichkeit, den Hochdrucksensor 24 in der Leistung oder in einem mit der Leitung 10 verbundenen Leitungsbereich anzuordnen, während der Hochdrucksensor 23 nach wie vor zwischen der Ventileinrichtung 20 und der Regelventileinrichtung 11 vorgesehen ist. Wiederum alternativ hierzu kann es auch vorgesehen sein, dass der Hochdrucksensor 23 in der Leitung 9 oder in dem mit der Leitung 9 verbundenen Leitungsbereich 21 und der Hochdrucksensor 24 in der Leitung 10 oder in einem mit der Leitung 10 verbundenen Leitungsbereich angeordnet sind. Um die Lastfühligkeit und auch den Getriebeschutz mittels der Hochdrucklimitierung im vorbeschriebenen Umfang über die Einrichtung 22 darstellen zu können, ist zunächst vorzugsweise softwareseitig das Maximum der über die Hochdrucksensoren 23 und 24 ermittelten Drücke zu ermitteln. Anschließend ist die Hochdrucklimitierung im gewünschten Umfang sowohl im Zug- als auch im Schubbetrieb durchführbar.

Übersteigt der Hochdruck im Bereich der Leitung 9 oder der Leitung 10 eine vordefinierte Druckgrenze und befindet sich das CVT-Getriebe im Zugbetrieb, ist eine Zugkraftlimitierung ganz allgemein durch das nach Kurz Stellen des CVT-Getriebes realisierbar. Für den Fall, dass das CVT-Getriebe mit zwei Fahrbereichen ausgeführt ist und die Vorrichtung in der in Fig. 1 dargestellten Art und Weise mit der Regelventileinheit 11 ausgeführt ist, ist die Regelventileinheit 11 in die in Fig. 1 dargestellte Stellung über den Proportionalmagneten 13 und die Federeinrichtung 14 zu überführen, wobei sich der Ventilschieber 16 dann in Durchlassstellung befindet. Im zweiten Fahrbereich ist der Ventilschieber 16 in Kreuzstellung zu überführen, wobei der Proportionalmagnet 13 hierfür entsprechend zu bestromen ist. Im Allgemeinen ist das CVT-Getriebe für eine Hochdrucklimitierung im Zugbetrieb über die Regelventileinheit 11 soweit nach kurz zu verstellen, bis sich der gewünschte Hochdruck bzw. die gewünschte Zugkraft einstellt.

Im Schubbetrieb ist eine Zugkraftlimitierung bzw. die Hochdrucklimitierung im Allgemeinen durch das nach lang Stellen des CVT-Getriebes realisierbar. Dafür ist die Regelventileinheit 11 bei eingelegtem ersten Fahrbereich im CVT-Getriebe in Kreuzstellung zu überführen und bei eingelegtem zweiten Fahrbereich in die in Fig. 1 gezeigte Durchlassstellung zu bringen.

Das nach kurz Stellen im Zugbetrieb bzw. das nach lang Stellen im Schubbetrieb erfolgt dabei immer so lange, bis der gemessene Hochdruck im Bereich der Leitung 9 bzw. der Leitung 10 gleich dem vorgegebenen maximalen Soll-Hochdruck ist. Eine Lastfühligkeit des CVT-Getriebes kann in Verbindung mit einer gezielten maximalen Soll-Druckvorgabe, beispielsweise durch einen Fahrerwunsch, die Vorgabe eines Fahrstrategierechners oder auch in Abhängigkeit eines notwendigen Bremsdruckes für einen Getriebeschutz, im gewünschten bzw. erforderlichen Umfang erzielt werden.

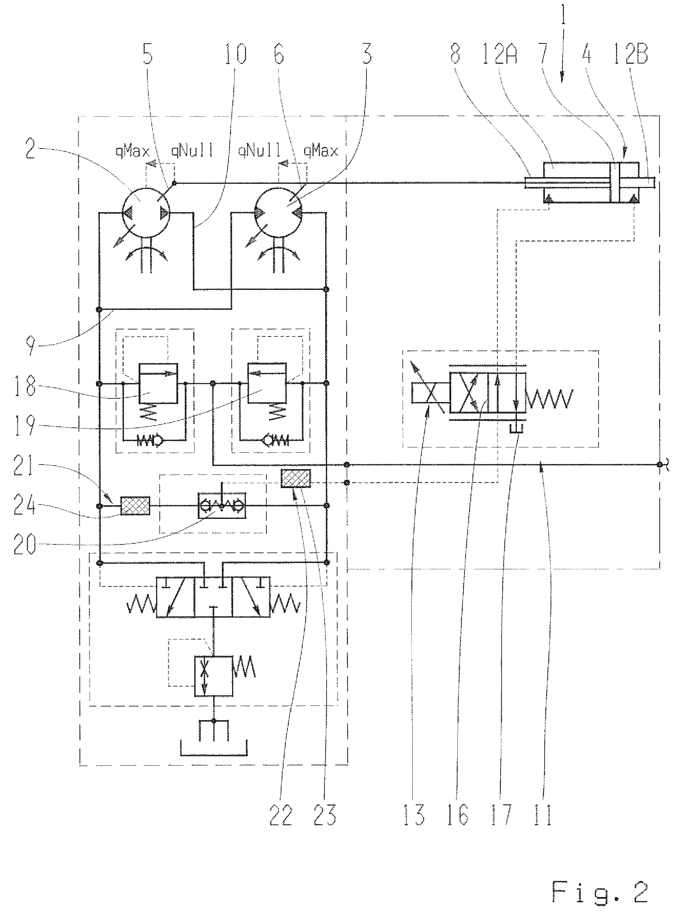

Das in Fig. 2 dargestellte Ausführungsbeispiel der Vorrichtung 1 unterscheidet sich von dem in Fig. 1 gezeigten Ausführungsbeispiel der Vorrichtung 1 konstruktiv dadurch, dass die Vorrichtung 1 gemäß Fig. 2 ohne die mechanische Kopplung 15 ausgebildet ist. Um die über die mechanische Rückmeldung der mechanischen Kopplung 15 stabile Einstellung einer Übersetzung im Bereich der beiden Hydraulikmaschinen 2 und 3 über die Vorrichtung 1 gemäß Fig. 2 zur Verfügung stellen zu können, wird die Regelventileinheit 11 der Vorrichtung 1 gemäß Fig. 2 bzw. dessen Proportionalmagnet 13 zusätzlich in Abhängigkeit der wiederum in Abhängigkeit der Hubvolumina der Hydraulikmaschinen 2 und 3 variierenden Übersetzung der mit den Hydraulikmaschinen 2 und 3 ausgeführten CVT-Getriebeeinrichtung betätigt. Hierfür sind beispielsweise Signale von im Bereich des CVT-Getriebes vorgesehenen Drehzahlsensoren oder eines Schwenkwinkelsensors zur Erfassung der Schwenkwinkel der Achsen 5 und 6 der Hydraulikmaschinen 2 und 3 verwendbar, um abzugleichen, ob die aktuell eingelegte Ist-Übersetzung des CVT-Getriebes der angeforderten Soll-Übersetzung entspricht. Wenn dies der Fall ist, wird ein weiteres Verstellen des Kolbens 7 unterbunden, indem der über die Regelventileinheit 11 geführte Hydraulikfluidvolumenstrom über eine geeignete Betätigung bzw. eine geeignete Bestromung des Proportionalmagneten 13 auf null geregelt wird.

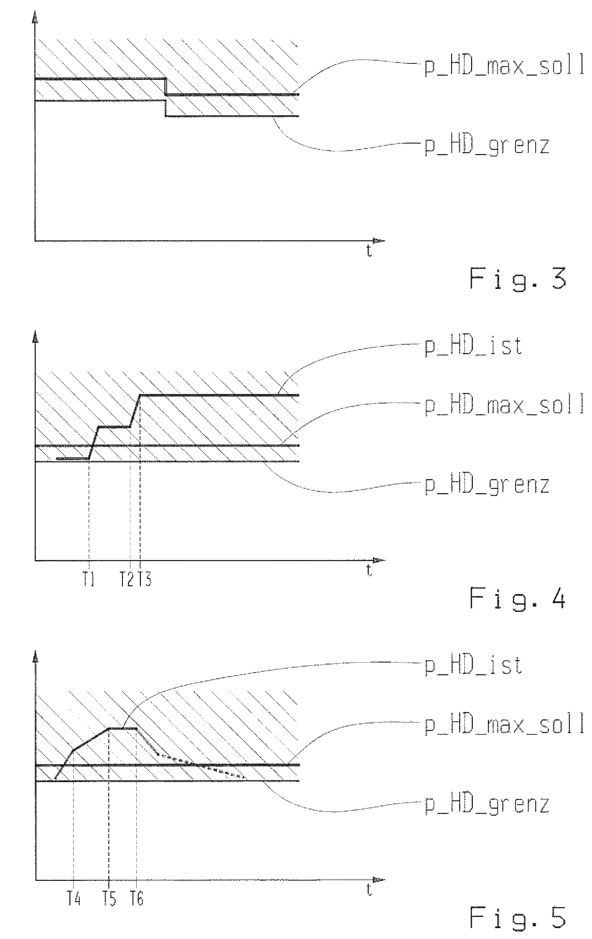

In Fig. 3 ist der Verlauf einer maximalen Soll-Hochdruckvorgabe p_HD_max_soll und eines Druckgrenzwertes p_HD_grenz über der Zeit t dargestellt. Der Druckgrenzwert p_HD_grenz ist vorliegend um einen Offset-Wert kleiner als die maximale Soll-Hochdruckvorgabe p_HD_max_soll. Über den Offset-Wert bzw. den Druckabstand des Druckgrenzwertes p_HD_grenz von der maximalen Soll-Hochdruckvorgabe p_HD_max_soll wird der Eingriffspunkt der Hochdrucklimitierungsfunktion sowohl bei der Vorrichtung 1 gemäß Fig. 1 als auch bei der Vorrichtung 1 gemäß Fig. 2 definiert und der Bereich, in dem die Hochdrucklimitierungsfunktion wirkt, entsprechend festgelegt. Das bedeutet, dass die Hochdrucklimitierungsfunktion, die über die Regelventileinheit 11 durch entsprechende Bestromung des Proportionalmagneten 13 erfolgt, aktiv eingreift, sobald sich der Ist-Wert des Drucks im Bereich der Leitungen 9 und 10 oberhalb des Druckgrenzwertes p_HD_grenz befindet.

Der Offset-Wert bzw. der Druckabstand zwischen dem Druckgrenzwert p_HD_grenz und der maximalen Soll-Hochdruckvorgabe p_HD_max_soll ist frei parametrierbar. So besteht beispielsweise die Möglichkeit bei einem größeren Offset-Wert die Verstellgeschwindigkeit der Hubvolumina der Hydraulikmaschinen 2 und 3 kleiner zu wählen und die Zugkraftlimitierung mit einem weicheren Verlauf darzustellen und einen höheren Fahrkomfort zu erreichen. Des Weiteren sind bei höheren Offset-Werten die Funktionsweise des CVT-Getriebes beeinträchtigende kritische Druckwerte im Bereich der Hydraulikmaschinen mit höherer Wahrscheinlichkeit vermeidbar, wenn die Hochdrucklimitierung mit ausreichendem Abstand zu einer maximal möglichen Soll-Hochdruckvorgabe durchgeführt wird.

Fig. 4 und Fig. 5 zeigen jeweils Verläufe des Druckgrenzwertes p_HD_grenz, der maximalen Soll-Hochdruckvorgabe p_HD_max_soll und des Ist-Hochdruckes p_HD_ist im Bereich der Leitungen 9 oder 10 bzw. der Hydraulikmaschinen 2 und 3. Um die maximale Soll-Hochdruckvorgabe p_HD_max_soll in gewünschtem Umfang umzusetzen und funktionskritische Druckwerte im Bereich der Hydraulikmaschinen 2 und 3 bzw. der Leitungen 9 und 10 im erforderlichen Umfang vermeiden zu können, kann die Aggressivität der Hochdrucklimitierungsfunktion bzw. die Dynamik des Verschwenkens der Hydraulikmaschinen 2 und 3 an den jeweils vorliegenden Betriebszustandsverlauf im hierfür erforderlichen Umfang im nachfolgend näher beschriebenen Umfang angepasst werden. Dabei ist eine hohe Dynamik bzw. eine hohe Aggressivität durch ein weites Öffnen der Regelventileinheit 11 erzielbar und eine schnelle Übersetzungsänderung bzw. eine hohe Verstellgeschwindigkeit der Hydraulikmaschinen 2 und 3 realisierbar.

In Abhängigkeit des jeweils vorliegenden Anwendungsfalles besteht beispielsweise die Möglichkeit, die Verstellgeschwindigkeit der Hubvolumina der Hydraulikmaschinen 2 und 3 bzw. die Aggressivität gering zu wählen, wenn ein Abstand zwischen dem Ist-Hochdruck p_HD_ist und dem Grenzdruckwert p_HD_grenz gering ist. Dies ist beispielsweise bei dem in Fig. 4 dargestellten Verlauf des Ist-Hochdruckes p_HD_ist bis zum Zeitpunkt T1 der Fall. Zwischen dem Zeitpunkt T1 und dem Zeitpunkt T2 ist der Abstand zwischen dem Ist-Hochdruck p_HD_ist und dem Druckgrenzwert p_HD_grenz größer, weshalb auch die dargestellte Dynamik bzw. die Aggressivität höher ist. Ab dem Zeitpunkt T2 steigt die Abweichung zwischen dem Ist-Hochdruck p_HD_ist und dem Druckgrenzwert p_HD_grenz weiter an und die Aggressivität bzw. die Verstellgeschwindigkeit der Hubvolumina der Hydraulikmaschinen wird ebenfalls weiter angehoben, um den Ist-Hochdruck p_HD_ist innerhalb gewünscht kurzer Betriebszeiten in Richtung der maximalen Soll-Hochdruckvorgabe p_HD_maxsoll zu führen. Generell ist die Aggressivität umso größer einstellbar, je stärker die maximale Soll-Hochdruckvorgabe p_HD_maxsoll bzw. der Druckgrenzwert p_HD_grenz überschritten wird, um einen angeforderten Betriebszustandsverlauf einstellen zu können.

Alternativ oder zusätzlich hierzu besteht auch die Möglichkeit, die Aggressivität in Abhängigkeit des Gradienten der Differenz zwischen dem Verlauf des Ist-Hochdruckes p_HD_ist und dem Verlauf der maximalen Soll-Hochdruckvorgabe p_HD_max_soll zu verändern. Dabei kann die Aggressivität bei größeren positiven Gradienten der Differenz zwischen dem Verlauf des Ist-Hochdruckes p_HD_ist und dem Verlauf der maximalen Soll-Hochdruckvorgabe p_HD_max_soll eingestellt werden, um das CVT-Getriebe mit hoher Spontaneität betreiben zu können und funktionskritische Betriebszustände mit hoher Sicherheit vermeiden zu können. Bei positiven Vorzeichen und mittleren Beträgen des Gradienten der Differenz zwischen dem Verlauf des Ist-Hochdruckes p_HD_ist und dem Verlauf der maximalen Soll-Hochdruckvorgabe p_HD_max_soll ist die Aggressivität reduzierbar, während die Verstellgeschwindigkeit der Hubvolumina der Hydraulikmaschinen 2 und 3 bei kleinen Beträgen oder negativem Gradienten der Differenz zwischen dem Verlauf des Ist-Hochdruckes p_HD_ist und dem Verlauf der maximalen Soll-Hochdruckvorgabe p_HD_max_soll oberhalb des Druckgrenzwertes p_HD_grenz gering vorgebbar ist, um ein für einen Fahrer eines mit dem CVT-Getriebe ausgeführten Fahrzeuges erwartbares Fahrverhalten darstellen zu können.

Vorliegend ist die Verstellgeschwindigkeit der Hubvolumina der Hydraulikmaschinen 2 und 3 oberhalb des Druckgrenzwertes p_HD_grenz im Bereich der die Hydraulikmaschinen 2 und 3 miteinander verbindenden Leitungen 9 und 10 bis zu einem Zeitpunkt T4 des Verlaufs des Ist-Hochdruckes p_HD_ist gemäß Fig. 6 hoch, während die Aggressivität zwischen den Zeitpunkten T4 und T5 in Bezug auf die Verstellgeschwindigkeit vor dem Zeitpunkt T4 aufgrund der kleineren Gradienten der Differenz zwischen dem Verlauf des Ist-Hochdruckes p_HD_ist und dem Verlauf der maximalen Soll-Hochdruckvorgabe p_HD_max_soll geringer vorgegeben wird. Ab dem Zeitpunkt T5 wird die Verstellgeschwindigkeit der Hubvolumina der Hydraulikmaschinen 2 und 3 oberhalb des Druckgrenzwertes p_HD_grenz weiter reduziert, da der Gradient der Differenz zwischen dem Verlauf des Ist-Hochdruckes p_HD_ist und dem Verlauf der maximalen Soll-Hochdruckvorgabe p_HD_max_soll zunächst im Wesentlichen gleich null und anschließend negativ ist.

Damit wird vermieden, dass der Ist-Hochdruck p_HD_ist die maximale Soll-Hochdruckvorgabe p_HD_max_soll nicht in unerwünschtem Umfang innerhalb kurzer Betriebszeiten derart unterschreitet, dass ein Fahrzeug ein von einem Fahrer aktuell nicht erwartetes Fahrverhalten aufweist.

Des Weiteren besteht auch die Möglichkeit, die Verstellgeschwindigkeit der Hubvolumina der Hydraulikmaschinen bzw. die Aggressivität in Abhängigkeit des aktuell vorliegenden Hochdruckes im Bereich der Hydraulikmaschinen 2 und 3 bzw. der Leitungen 9 und 10 vorzugeben und die Aggressivität beispielsweise im Schub- und Zugbetrieb unterschiedlich einzustellen. Darüber hinaus kann es auch vorgesehen sein, dass die Aggressivität in Abhängigkeit eines fahrerseitigen Verzögerungswunsches oder in Abhängigkeit eines aktuell im CVT-Getriebe eingelegten Fahrbereiches eingestellt wird.

Um die Verstellgeschwindigkeit bzw. die Aggressivität jeweils in gewünschtem Umfang an den vorliegenden Anwendungsfall angepasst vorgeben zu können, besteht jeweils die Möglichkeit, lediglich eine der vorbeschriebenen Möglichkeiten zum Variieren der Aggressivität oder eine beliebige Kombination daraus vorzusehen und die Verstellgeschwindigkeit vorzugeben.

Sowohl der Eingriffspunkt der Drucklimitierungsfunktion, d.h. der Druckgrenzwert p_HD_grenz, als auch die Aggressivität sind steuerungsseitig nahezu beliebig einstellbar. Über die flexible Steuerung besteht auf einfache Art und Weise die Möglichkeit, unterschiedlichste Charakteristiken der Regelventileinheit 11 abzubilden.

Über die erfindungsgemäße Vorrichtung 1 gemäß Fig. 1 oder gemäß Fig. 2 ist eine Zugkraftlimitierung im Bereich eines Abtriebs eines mit einem in der vorbeschriebenen Art und Weise ausgeführten CVT-Getriebes und somit eine Lastfühligkeit in Verbindung mit einem Getriebeschutz in Abhängigkeit von Kundenwünschen, der aktuell vorliegenden Fahrsituation, dem aktuell eingelegten Fahrbereich, einem Verzögerungswunsch eines Fahrers, einem Zustand des CVT-Getriebes, d.h. während eines Zug- und Schubbetriebes oder in Abhängigkeit von einem Eintritt oder einem Verlassen der Hochdrucklimitierungsfunktion, oder dergleichen, auf konstruktive einfache und kostengünstige Art und Weise bei gleichzeitig geringem Betätigungsaufwand einstellbar.

### Bezugszeichen

- 1: Vorrichtung
- 2: Hydraulikmaschine
- 3: Hydraulikmaschine
- 4: Kolben-Zylinder-Einrichtung
- 5: Achse
- 6: Achse
- 7: Kolben der Kolben-Zylinder-Einrichtung
- 7A, 7B: Wirkfläche des Kolbens
- 8: Kolbenstange
- 9: Leitung
- 10: Leitung
- 11: Regelventileinheit
- 12A, 12B: Kolbenraum
- 13: Proportionalmagnet
- 14: Federeinrichtung
- 15: mechanische Kopplung
- 16: Ventilschieber der Regelventileinheit
- 17: druckloser Bereich
- 18: Hochdruckbegrenzungsventil
- 19: Hochdruckbegrenzungsventil
- 20: Ventileinrichtung
- 21: Leitungsbereich
- 22: Einrichtung
- 23: Hochdrucksensor
- 24: Hochdrucksensor
- p_HD_grenz: Druckgrenzwert
- p_HD_ist: Ist-Hochdruck
- p_HD_max_sollmaximale: Soll-Hochdruckvorgabe
- t: Zeit
- T1 bis T6: diskreter Zeitpunkt

## Patentansprüche

1. Vorrichtung (1) zum Variieren der Hubvolumina einer ersten Hydraulikmaschine (2) und einer zweiten Hydraulikmaschine (3), deren Hubvolumina jeweils in Abhängigkeit von Schwenkstellungen von verstellbaren Achsen (5, 6) der Hydraulikmaschinen (2, 3) stehen und die über Leitungen (9, 10) miteinander verbindbar sind, wobei die Achsen (5, 6) mit einer Kolben-Zylinder-Einrichtung (4) koppelbar sind, die im Bereich von Wirkflächen mit im Bereich einer Regelventileinheit (11) einstellbaren Drücken zum Verschwenken der Achsen (5, 6) beaufschlagbar ist, wobei die Drücke im Bereich der Hydraulikmaschinen (2, 3) über die Regelventileinheit (11) begrenzbar sind und die Regelventileinheit (11) über eine Ventileinrichtung (20) jeweils mit derjenigen der die Hydraulikmaschinen (2, 3) verbindenden Leitungen (9, 10) koppelbar ist, in der der höhere Druck vorliegt, und wobei eine Einrichtung (22) zum Bestimmen eines aktuell vorliegenden Ist-Druckes (p_HD_ist) stromauf der Regelventileinheit (11) vorgesehen ist, **dadurch gekennzeichnet, dass** über die Einrichtung (22) auch ein Ist-Druck stromauf der Ventileinrichtung (20) in Bereich einer (9) der die Hydraulikmaschinen (2, 3) verbindenden Leitungen (9, 10) ermittelbar ist, wobei die Druckseiten der Hydraulikmaschinen (2, 3) bestimmbar sind, und wobei die Re gelventileinheit (11) in Abhängigkeit der über die Einrichtung (22) bestimmbaren Ist-Druckwerte (p_HD_ist) betätigbar ist.

2. Vorrichtung nach Anspruch 1, **dadurch gekennzeichnet, dass** der vorliegende Ist-Druck (p_HD_ist) im Bereich einer der die Hydraulikmaschinen (2, 3) verbindenden Leitungen (9 oder 10) und stromab der mit beiden die Hydraulikmaschinen (2, 3) verbindenden Leitungen (9, 10) in Wirkverbindung stehenden und vorzugsweise als Wechselventil ausgeführen Ventileinrichtung (20) über die Einrichtung (22) ermittelbar ist, wobei der stromab der Ventileinrichtung (20) vorgesehene Leitungsbereich über die Ventileinrichtung (20) immer mit der die Hydraulikmaschinen (2, 3) verbindenden Leitung (9 oder 10) gekoppelt ist, in der aktuell der höhere Ist-Druck (p_HD_ist) vorliegt.

3. Vorrichtung nach Anspruch 1, **dadurch gekennzeichnet, dass** der Ist-Druck (p_HD_ist) über die Einrichtung (22) im Bereich der Leitungen (9, 10), die die Hydraulikmaschinen (2, 3) miteinander verbinden, oder zumindest in einem hiermit verbundenen Leitungsbereich ermittelt wird.

4. Vorrichtung nach einem der Ansprüche 1 bis 3, **dadurch gekennzeichnet, dass** die Einrichtung (22) mit zwei Hochdrucksensoren (23, 24) ausgebildet ist.

5. Vorrichtung nach einem der Ansprüche 1 bis 3, **dadurch gekennzeichnet, dass** die Einrichtung mit nur einem Hochdrucksensor und einem Druckseitenschalter ausgeführt ist.

6. Vorrichtung nach Anspruch 4 oder 5, **dadurch gekennzeichnet, dass** der eine Hochdrucksensor (24) oder der Druckseitenschalter in einer der die Hydraulikmaschinen (2, 3) verbindenden Leitungen oder in einem mit dieser Leitung (10) verbundenen Leitungsbereich angeordnet ist, während der Druckseitenschalter oder der andere Hochdrucksensor (23) zwischen der Ventileinrichtung (20) und der Regelventileinrichtung (11) vorgesehen ist.

7. Vorrichtung nach Anspruch 4 oder 5, **dadurch gekennzeichnet, dass** der eine Hochdrucksensor (23) oder der Druckseitenschalter in einer der die Hydraulikmaschinen (2, 3) verbindenden Leitungen (9) oder in dem mit dieser Leitung (9) verbundenen Leitungsbereich (21) und der Druckseitenschalter oder der andere Hochdrucksensor (24) in der anderen die Hydraulikmaschinen (2, 3) verbindenden Leitungen (10) oder in einem mit der anderen Leitung (10) verbundenen Leitungsbereich angeordnet sind.

8. Vorrichtung nach einem der Ansprüche 1 bis 7, **dadurch gekennzeichnet, dass** die Regelventileinheit (11) als 4/2-Regelventil ausgebildet ist, dessen Ventilschieber (16) von einer variierbaren Stellkraft entgegen einer vorzugsweise veränderlichen weiteren am Ventilschieber (16) angreifenden Stellkraft zwischen einer ersten Endlage in Richtung einer zweiten Endlage verstellbar ist.

9. Vorrichtung nach Anspruch 8, **dadurch gekennzeichnet, dass** ein Kolben (7) der vorzugsweise doppeltwirkenden Kolben-Zylinder-Einrichtung (4) mit dem Ventilschieber (16) der Regelventileinheit (11) wirkverbunden ist und die weitere am Ventilschieber (16) angreifende Stellkraft in Abhängigkeit einer Stellung des Kolbens (7) variiert.

10. Vorrichtung nach Anspruch 9, **dadurch gekennzeichnet, dass** die am Ventilschieber der Regelventileinheit (11) angreifende Stellkraft in Abhängigkeit einer im Bereich einer Einrichtung ermittelbaren und in Abhängigkeit der Hubvolumina der Hydraulikmaschinen (2, 3) variierenden Übersetzung einer mit den Hydraulikmaschinen (2, 3) ausgeführten Getriebeeinrichtung veränderbar ist,

11. Vorrichtung nach einem der Ansprüche 8 bis 10, **dadurch gekennzeichnet, dass** die Hubvolumina der Hydraulikmaschinen (2, 3) oberhalb eines vorzugsweise variierbaren Druckgrenzwertes (p_HD grenz) im Bereich der die Hydraulikmaschinen (2, 3) miteinander verbindenden Leitungen (9, 10) durch eine entsprechende Einstellung der am Ventilschieber (16) der Regelventileinheit (11) angreifenden Steilkraft auf Werte führbar sind, zu den der Druck in den Leitungen wenigstens annähernd ein dem Druckgrenzwert (p_HD_grenz) entsprechendes Niveau aufweist.

12. Vorrichtung nach Anspruch 11, **dadurch gekennzeichnet, dass** der Druckgrenzwert (p_HD_grenz) kleiner als oder gleich einem im Bereich der die Hydraulikmaschinen (2, 3) verbindenden Leitungen (9, 10) einzustellenden maximaler SollDruckwert (p_HD_max_soll) ist, der zur Übertragung eines definierten Drehmomentes zwischen den Hydraulikmaschinen (2, 3) angefordert ist.

13. Vorrichtung nach Anspruch 12, **dadurch gekennzeichnet, dass** eine Verstellgeschwindigkeit der Hubvolumina der Hydraulikmaschinen (2, 3) oberhalb des Druckgrenzwertes (p_HD_grenz) im Bereich der die Hydraulikmaschinen (2, 3) miteinander verbindenden Leitungen (9, 10) in Abhängigkeit einer Abweichung zwischen einem Ist-Druckwert (p_HD_ist) und dem maximalen Soll-Druckwerte (p_HD_max_soll) im Bereich der die Hydraulikmaschinen (2, 3) verbindenden Leitungen (9, 10) variierbar ist.

14. Vorrichtung nach einem der Ansprüche 11 bis 13, **dadurch gekennzeichnet, dass** eine Verstellgeschwindigkeit der Hubvolumina der Hydraulikmaschinen (2, 3) oberhalb des Druckgrenzwertes (p_HD_grenz) im Bereich der die Hydraulikmaschinen (2, 3) miteinander verbindenden Leitungen (9, 10) in Abhängigkeit eines Gradienten des Verlaufes der Differenz zwischen dem Ist-Druck (p_HD_ist) und der maximalen Soll-Hochdruckvorgabe (p_HD_max_soll) im Bereich der die Hydraulikmaschinen (2, 3) verbindenden Leitungen (9, 10) variierbar ist.

## Claims

1. Device (1) for varying the stroke volumes of a first hydraulic machine (2) and of a second hydraulic machine (3), the stroke volumes of which are each dependent on pivoting positions of adjustable axles (5, 6) of the hydraulic machines (2, 3) and which can be connected to one another via lines (9, 10), wherein the axles (5, 6) can be connected to a piston cylinder device (4) to which pressures, adjustable in the region of a regulating valve unit (11), can be applied in the region of effective areas in order to pivot the axles (5, 6), wherein the pressures can be limited in the region of the hydraulic machines (2, 3) by means of the regulating valve unit (11), and the regulating valve unit (11) can be coupled via a valve apparatus (20) to, in each case, that line of the lines (9, 10) connecting the hydraulic machines (2, 3) in which the relatively high pressure is present, and wherein an apparatus (22) for determining a currently present actual pressure (p_HD_ist) is provided upstream of the regulating valve unit (11), **characterized in that** by means of the apparatus (22) it is also possible to detect an actual pressure upstream of the valve apparatus (20) in the region of one (9) of the lines (9, 10) connecting the hydraulic machines (2, 3), wherein the pressure sides of the hydraulic machines (2, 3) can be determined, and wherein the regulating valve unit (11) can be activated as a function of the actual pressure values (p_HD_ist) which can be determined by means of the apparatus (22).

2. Device according to Claim 1, **characterized in that** the present actual pressure (p_HD_ist) can be detected by means of the apparatus (22) in the region of one of the lines (9 or 10) connecting the hydraulic machines (2, 3) and downstream of the valve apparatus (20) which is operatively connected to two lines (9, 10) which connect the hydraulic machines (2, 3) and is preferably a shuttle valve, wherein the line region, provided downstream of the valve apparatus (20), is always coupled via the valve apparatus (20) to the line (9 or 10) which connects the hydraulic machines (2, 3) and in which currently the higher actual pressure (p_HD_ist) is present.

3. Device according to Claim 1, **characterized in that** the actual pressure (p_HD_ist) is detected by means of the apparatus (22) in the region of the lines (9, 10) which connect the hydraulic machines (2, 3) to one another, or at least in a line region which is connected thereto.

4. Device according to one of Claims 1 to 3, **characterized in that** the apparatus (22) is embodied with two high-pressure sensors (23, 24).

5. Device according to one of Claims 1 to 3, **characterized in that** the apparatus is embodied with just one high-pressure sensor and a pressure-side switch.

6. Device according to Claim 4 or 5, **characterized in that** the one high-pressure sensor (24) or the pressure-side switch is provided in one of the lines connecting the hydraulic machines (2, 3) or in a line region connected to this line (10), while the pressure-side switch or the other high-pressure sensor (23) is provided between the valve apparatus (20) and the regulating valve apparatus (11).

7. Device according to Claim 4 or 5, **characterized in that** the one high-pressure sensor (23) or the pressure-side switch is arranged in one of the lines (9) connecting the hydraulic machines (2, 3) or in the line region (21) connected to this line (9), and the pressure-side switch or the other high-pressure sensor (24) is arranged in the other of the lines (10) connecting the hydraulic machines (2, 3) or in a line region connected to the other line (10).

8. Device according to one of Claims 1 to 7, **characterized in that** the regulating valve unit (11) is a 4/2 regulating valve whose valve slide (16) can be adjusted by variable actuating force counter to a preferably variable further actuating force engaging on the valve slide (16), between a first end position in the direction of a second end position.

9. Device according to Claim 8, **characterized in that** a piston (7) of preferably double-active piston-cylinder apparatus (4) is operatively connected to the valve slide (16) of the regulating valve unit (11), and varies the further actuating force, acting on the valve slide (16), as a function of a position of the piston (7).

10. Device according to Claim 9, **characterized in that** the actuating force acting on the valve slide of the regulating valve unit (11) can be varied as a function of a transmission ratio of a transmission apparatus which is embodied with the hydraulic machines (2, 3), said transmission ratio being detectable in the region of a device and varying as a function of the stroke volumes of the hydraulic machines (2, 3).

11. Device according to one of Claims 8 to 10, **characterized in that** above a preferably variable pressure limiting value (p_HD_grenz) in the region of the lines (9, 10) connecting the hydraulic machines (2, 3) to one another, the stroke volumes of the hydraulic machines (2, 3) can be adjusted, by means of corresponding adjustment of the actuating force acting on the valve slide (16) of the regulating valve unit (11), to values at which the pressure in the lines has at least approximately a level corresponding to the pressure limiting value (p_HD_grenz).

12. Device according to Claim 11, **characterized in that** the pressure limiting value (p_HD_grenz) is lower than or equal to a maximum setpoint pressure value (p_HD_max_soll) which is to be set in the region of the lines (9, 10) connecting the hydraulic machines (2, 3) and which is required for the transmission of a defined torque between the hydraulic machines (2, 3).

13. Device according to Claim 12, **characterized in that** above the pressure limiting value (p_HD_grenz), an adjustment speed of the stroke volumes of the hydraulic machines (2, 3) in the region of the lines (9, 10) connecting the hydraulic machines (2, 3) to one another can be varied as a function of a difference between an actual pressure value (p_HD_ist) and the maximum setpoint pressure value (p_HD_max_soll) in the region of the lines (9, 10) connecting the hydraulic machines (2, 3).

14. Device according to one of Claims 11 to 13, **characterized in that** above the pressure limiting value (p_HD_grenz) an adjustment speed of the stroke volumes of the hydraulic machines (2, 3) in the region of the lines (9, 10) connecting the hydraulic machines (2, 3) to one another can be varied as a function of a gradient of the profile of the difference between the actual pressure (p_HD_ist) and the maximum setpoint high-pressure prescription (p_HD_max_soll) in the region of the lines (9, 10) connecting the hydraulic machines (2, 3).

## Revendications

1. Dispositif (1) pour faire varier les cylindrées d'une première machine hydraulique (2) et d'une deuxième machine hydraulique (3) dont les cylindrées sont respectivement dépendantes de positions de pivotement d'axes réglables (5, 6) des machines hydrauliques (2, 3) et qui peuvent être reliées entre elles via des conduites (9, 10), dans lequel les axes (5, 6) peuvent être couplés avec un dispositif de piston-cylindre (4) qui peut être alimenté, dans la zone de surfaces actives, avec des pressions réglables dans la zone d'une unité de soupape de réglage (11) pour faire pivoter les axes (5, 6), dans lequel les pressions peuvent être limitées dans la zone des machines hydrauliques (2, 3) via l'unité de soupape de réglage (11), et l'unité de soupape de réglage (11) pouvant respectivement être couplée, via un dispositif de soupape (20), avec celle des conduites (9, 10) reliant les machines hydrauliques (2, 3) dans laquelle règne la pression la plus élevée, et dans lequel on prévoit un dispositif (22) pour la détermination d'une pression réelle (p_HD_ist) régnant actuellement en amont de l'unité de soupape de réglage (11), **caractérisé en ce que** via le dispositif (22), il est également possible de déterminer une pression réelle en amont du dispositif de soupape (20) dans la zone d'une (9) des conduites (9, 10) reliant les machines hydrauliques (2, 3), dans lequel les côtés de pression des machines hydrauliques (2, 3) peuvent être déterminés et dans lequel l'unité de soupape de réglage (11) peut être actionnée en fonction des valeurs de pression réelles (p_HD_ist) pouvant être déterminées via le dispositif (22).

2. Dispositif selon la revendication 1, **caractérisé en ce que** la pression réelle (p_HD_ist) existante peut être déterminée dans la zone de l'une des conduites (9 ou 10) reliant les machines hydrauliques (2, 3) et en aval du dispositif de soupape (20) en liaison active avec les deux conduites (9, 10) reliant les machines hydrauliques (2, 3) et de préférence réalisé en tant que soupape à deux voies via le dispositif (22), dans lequel la zone de conduite prévue en aval du dispositif de soupape (20) est toujours couplée via le dispositif de soupape (20) avec la conduite (9 ou 10) reliant les machines hydrauliques (2, 3) dans laquelle règne actuellement la pression réelle (p_HD_ist) la plus élevée.

3. Dispositif selon la revendication 1, **caractérisé en ce que** la pression réelle (p_HD_ist) est déterminée via le dispositif (22) dans la zone des conduites (9, 10) qui relient entre elles les machines hydrauliques (2, 3) ou au moins dans une zone de conduite en liaison avec celle-ci.

4. Dispositif selon l'une des revendications 1 à 3, **caractérisé en ce que** le dispositif (22) est réalisé avec deux capteurs haute pression (23, 24).

5. Dispositif selon l'une des revendications 1 à 3, **caractérisé en ce que** le dispositif est conçu avec seulement un capteur haute pression et un commutateur de côté de pression.

6. Dispositif selon la revendication 4 ou 5, **caractérisé en ce que** ce capteur haute pression (24) ou le commutateur de côté de pression est disposé dans l'une des conduites reliant les machines hydrauliques (2, 3) ou dans une zone de conduite reliée à cette conduite (10) alors que le commutateur de côté de pression ou l'autre capteur haute pression (23) est prévu entre le dispositif de soupape (20) et le dispositif de soupape de réglage (11).

7. Dispositif selon la revendication 4 ou 5, **caractérisé en ce que** ce capteur haute pression (23) ou le commutateur de côté de pression est disposé dans l'une (9) des conduites reliant les machines hydrauliques (2, 3) ou dans la zone de conduite (21) reliée à cette conduite (9), et **en ce que** le commutateur de côté de pression ou l'autre capteur haute pression (24) est disposé dans l'autre conduite (10) reliant les machines hydrauliques (2, 3) ou dans une zone de conduite reliée à l'autre conduite (10).

8. Dispositif selon l'une des revendications 1 à 7, **caractérisé en ce que** l'unité de soupape de réglage (11) est réalisée en tant que soupape de réglage 4/2 dont le tiroir de soupape (16) peut être déplacé, grâce à une puissance de réglage pouvant varier à l'encontre d'une autre puissance de réglage de préférence variable s'exerçant sur le tiroir de soupape (16), entre une première position finale en direction d'une deuxième position finale.

9. Dispositif selon la revendication 8, **caractérisé en ce qu'**un piston (7) du dispositif de piston-cylindre (4) de préférence à effet double est en liaison active avec le tiroir de soupape (16) de l'unité de soupape de réglage (11) et **en ce que** l'autre puissance de réglage s'exerçant sur le tiroir de soupape (16) varie en fonction d'une position du piston (7).

10. Dispositif selon la revendication 9, **caractérisé en ce que** la puissance de réglage s'exerçant sur le tiroir de soupape de l'unité de soupape de réglage (11) peut varier en fonction d'un rapport de transmission, pouvant être déterminé dans la zone d'un dispositif et variant en fonction des cylindrées des machines hydrauliques (2, 3), d'un dispositif de transmission conçu avec les machines hydrauliques (2, 3).

11. Dispositif selon l'une des revendications 8 à 10, **caractérisé en ce que** les cylindrées des machines hydrauliques (2, 3) peuvent être amenées à des valeurs au-dessus d'une valeur limite de pression (p_HD_grenz) pouvant de préférence varier dans la zone des conduites (9, 10) reliant les machines hydrauliques (2, 3) entre elles grâce à un réglage correspondant de la puissance de réglage s'exerçant sur le tiroir de soupape (16) de l'unité de soupape de réglage (11), pour lesquelles valeurs la pression dans les conduites présente au moins approximativement un niveau correspondant à la valeur limite de pression (p_HD_grenz).

12. Dispositif selon la revendication 11, **caractérisé en ce que** la valeur limite de pression (p_HD_grenz) est inférieure ou égale à une valeur de pression de consigne maximale (p_HD_max_soll) à régler dans la zone des conduites (9, 10) reliant les machines hydrauliques (2, 3), laquelle est exigée pour la transmission d'un couple défini entre les machines hydrauliques (2, 3).

13. Dispositif selon la revendication 12, **caractérisé en ce que** l'on peut faire varier une vitesse de réglage des cylindrées des machines hydrauliques (2, 3) au-delà de la valeur limite de pression (p_HD_grenz) dans la zone des conduites (9, 10) reliant les machines hydrauliques (2, 3) entre elles en fonction d'une divergence entre une valeur de pression réelle (p_HD_ist) et la valeur de pression de consigne maximale (p_HD_max_soll) dans la zone des conduites (9, 10) reliant les machines hydrauliques (2, 3).

14. Dispositif selon l'une des revendications 11 à 13, **caractérisé en ce qu'**une vitesse de réglage des cylindrées des machines hydrauliques (2, 3) peut varier au-delà de la valeur limite de pression (p_HD_grenz) dans la zone des conduites (9, 10) reliant les machines hydrauliques (2, 3) entre elles en fonction d'un gradient de la variation de la différence entre la pression réelle (p_HD_ist) et la prescription de haute pression de consigne maximale (p_HD_max_soll) dans la zone des conduites (9, 10) reliant les machines hydrauliques (2, 3).
